# EUROPÄISCHE PATENTSCHRIFT

(11) **EP 1 196 706 B1**
(45) Veröffentlichungstag und Bekanntmachung des Hinweises auf die Patenterteilung: **04.02.2004**
(21) Anmeldenummer: 00945859.7
(22) Anmeldetag: 03.07.2000
(51) Int. Cl.: F16K 11/074, F16K 27/04

(54) **SANITÄRES MISCHVENTIL**
SANITARY MIXING VALVE
VANNE DE MELANGE SANITAIRE

(30) Priorität: 20.07.1999 AT 125699
(43) Veröffentlichungstag der Anmeldung: 17.04.2002
(73) Patentinhaber: Ideal-Standard GmbH & Co. OHG, 53121 Bonn (DE)
(72) Erfinder: SCHNEIDER, Hermann-Josef, D-54338 Schweich (DE)
(74) Vertreter: Puchberger, Rolf, Dipl. Ing.
(86) Internationale Anmeldenummer: PCT/EP2000/006175
(87) Internationale Veröffentlichungsnummer: WO 2001/006156

(56) Entgegenhaltungen:
- EP-A- 0 745 798
- US-A- 5 398 717
- US-A- 5 467 799
- US-A- 5 826 615
- US-A- 5 832 952

## Beschreibung

Die Erfindung betrifft ein sanitäres Mischventil mit zwei in einem Kartuschengehäuse angeordneten Ventilscheiben, von denen eine drehfest gehalten ist und die andere über einen an einer Spindel vorgesehenen Mitnehmer bewegt werden kann, wobei der Mitnehmer aus einem mit der Spindel fest verbundenen Teil, der in zumindest einem Bereich seines äußeren Umfanges eine Verzahnung aufweist und einer Hülse besteht, die an ihrer inneren Umfangsfläche eine Verzahnung auf weist, die im montierten Zustand in die Verzahnung des festen Teils des Mitnehmers eingreift, wobei die Hülse mindestens eine Anschlagnase aufweist, die in Zusammenwirkung mit mindestens einem Anschlag am Kartuschengehäuse die Rotationsbewegung des Mitnehmers begrenzt.

Bei solchen bekannten Mischventilen, die z.B. aus der EP-A 745 798, der US-A 5 467 799, der US-A 5 826 615 und der US-A 5 832 952 bekannt sind, wird durch Verdrehen der Spindel über den Mitnehmer die Lage der beweglichen Ventilscheibe im Verhältnis zur drehfesten Ventilscheibe verändert, so daß in Abhängigkeit von der Lage der beiden Ventilscheiben zueinander Kalt-, Misch- oder Warmwasser durch das Ventil fließen kann. Meist kann die bewegliche Ventilscheibe über den Mitnehmer auch in eine Lage gegenüber der festen Ventilscheibe gebracht werden, die die Absperrung des Ventils bewirkt. Um die Rotationsbewegung der beweglichen Ventilscheibe in jenem Bereich zu halten, der für die Bedienung des Mischventils erforderlich ist, weist der Mitnehmer mindestens eine Anschlagnase auf, die in Zusammenwirkung mit mindestens einem Anschlag am Kartuschengehäuse die Rotationsbewegung des Mitnehmers und damit der beweglichen Ventilscheibe begrenzt. Dieser Anschlag kann einer Temperaturbegrenzung gleichkommen, wenn er bewirkt, daß auch in der wärmsten Einstellung Mischwasser fließt, d.h., die Kaltwasseröffnung in der festen ventilscheibe nicht zur Gänze geschlossen ist. Bei einem fixen Anschlag ergibt sich jedoch die Temperatur des in der zuletzt beschriebenen Stellung austretenden Mischwassers aus den Vorlauftemperaturen für Warm- und Kaltwasser und aus dem Druck des zufließenden Kalt- und Warmwassers.

Dadurch, daß der Mitnehmer aus einem mit der Spindel fest verbundenen Teil, der in zumindest einem Bereich seines äußeren Umfanges eine Verzahnung aufweist, und einer Hülse besteht, die an ihrer inneren Umfangsfläche eine Verzahnung aufweist, die im montierten Zustand in die Verzahnung des festen Teils des Mitnehmers eingreift, kann durch versetzen der Hülse gegenüber dem fest verbundenen Teil des Mitnehmers entsprechend den Verzahnungen die Anschlagnase am Mitnehmer versetzt werden, und damit der Rotationsbereich des Mitnehmers und der beweglichen Ventilscheibe verändert werden. Mit der Änderung des Rotationsbereiches der beweglichen Ventilscheibe ändert sich aber auch die Maximaltemperatur des aus dem Ventil austretenden Wassers. Entsprechend der Teilung der Verzahnung ergibt sich ein minimaler Versetzungswinkel für den Anschlag und die Einstellbarkeit der Maximaltemperatur in bestimmten Stufen. Aus Gründen der Herstellungskosten und der erforderlichen Robustheit für die Mitnehmerteile kökönnen die Zähne nicht beliebig dünn und damit die Teilung nicht beliebig klein gemacht werden und die einstellbaren Abstufungen der Maximaltemperatur sind nicht zufriedenstellend.

Aufgabe der vorliegenden Erfindung ist es, ein sanitäres Mischventil der eingangs genannten Art so auszubilden, daß eine feinere Einstellbarkeit der Maximaltemperatur ermöglicht wird, ohne die Herstellungskosten wesentlich zu erhöhen oder die Robustheit der Mitnehmerteile negativ zu beeinflussen.

Die Aufgabe wird dadurch gelöst, daß sich mindestens eine erste Anschlagnase über einen Teil der Höhe der Hülse erstreckt und daß sich über einen anderen Teil der Höhe mindestens eine zweite Anschlagnase erstreckt, deren Anschlagfläche eine Versetzung gegenüber der Anschlagfläche der ersten Anschlagnase aufweist, wobei die Hülse in zwei verschiedene Richtungen auf den festen Teil des Mitnehmers aufsetzbar ist und die erste und die zweite An-. schlagnase alternativ mit dem Anschlag zusammenwirken, der im Kartuschengehäuse vorgesehen ist.

Die Versetzung der Anschlagflächen ermöglicht bei umgekehrtem Aufsetzen der Hülse auf den festen Teil des Mitnehmers Zwischenschritte zwischen den Abstufungen, die sich aus der Teilung der Verzahnung ergeben.

Vorzugsweise ragt der feste Teil des Mitnehmers im montierten Zustand mit seinem die Verzahnung aufweisenden Bereich durch eine zentrale Öffnung im Kartuschendeckel aus dem Kartuschengehäuse und die Hülse ist von außen auf dem festen Teil aufgesetzt und greift mit der mindestens einer Anschlagnase in die Öffnung, in die sich radial der mit dem Kartuschengehäuse feste Anschlag erstreckt. Die Hülse kann somit vom festen Teil des Mitnehmers abgezogen, verdreht und wieder aufgesetzt werden, ohne daß die Kartusche geöffnet werden muß.

Vorteilhafterweise ist die Teilung der Verzahnung am äußeren Umfang des festen Teils des Mitnehmers und an der inneren Umfangsfläche der Hülse 10°. Bei den üblichen Abmessungen und Materialien für Kartuschen von Mischventilen ergibt diese 10°-Teilung der Verzahnung eine annehmbare Abstufung für die Einstellung der Maximaltemperatur, ohne daß die Gefahr besteht, daß das Material des Mitnehmers im Bereich der Verzahnung ausbricht.

Vorzugsweise ist die Versetzung die Hälfte der Teilung der Verzahnung am äußeren Umfang des festen Teils des Mitnehmers und an der inneren Umfangsfläche der Hülse, so daß durch die Versetzung Zwischenschritte zwischen den durch die Verzahnung möglichen Schritte gegeben sind, die genau in der Mitte zwischen zwei schritten gemäß der Verzahnung liegen.

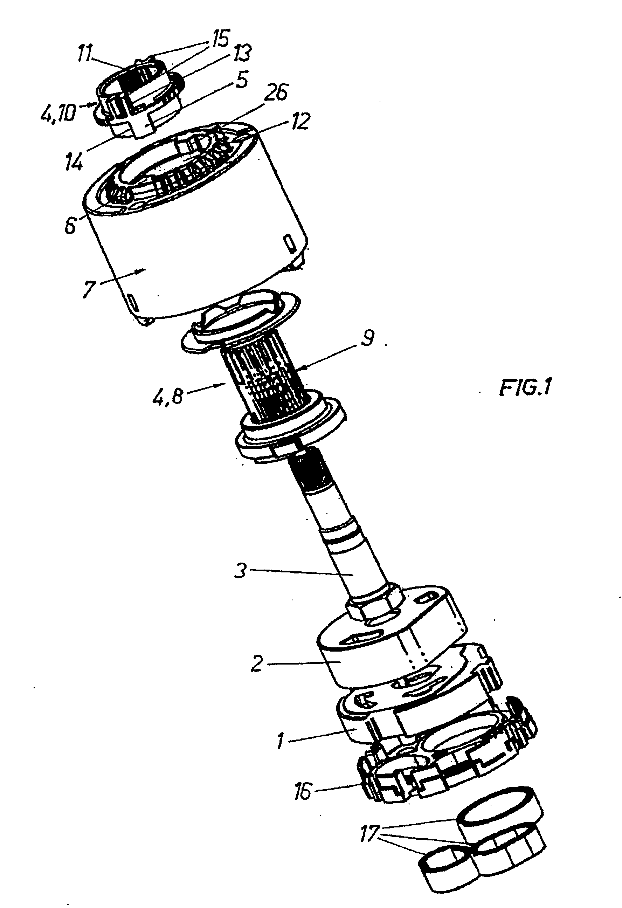

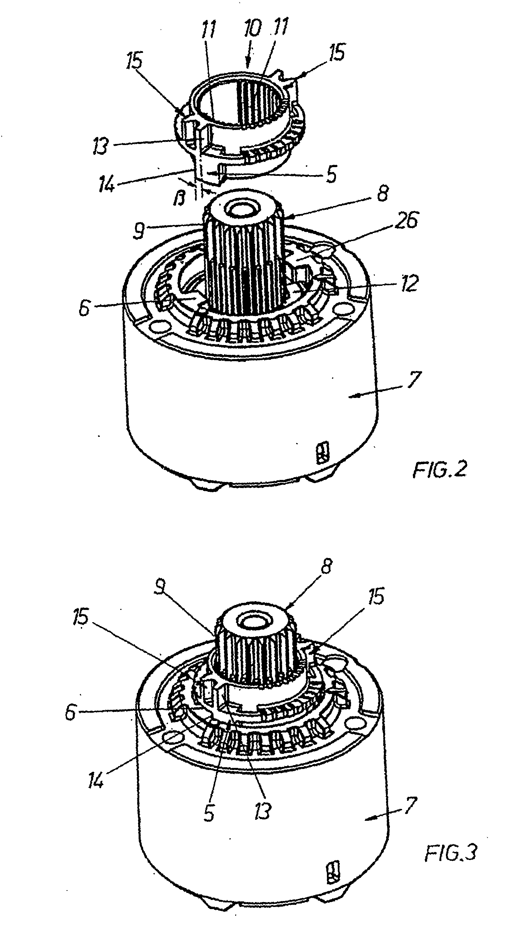

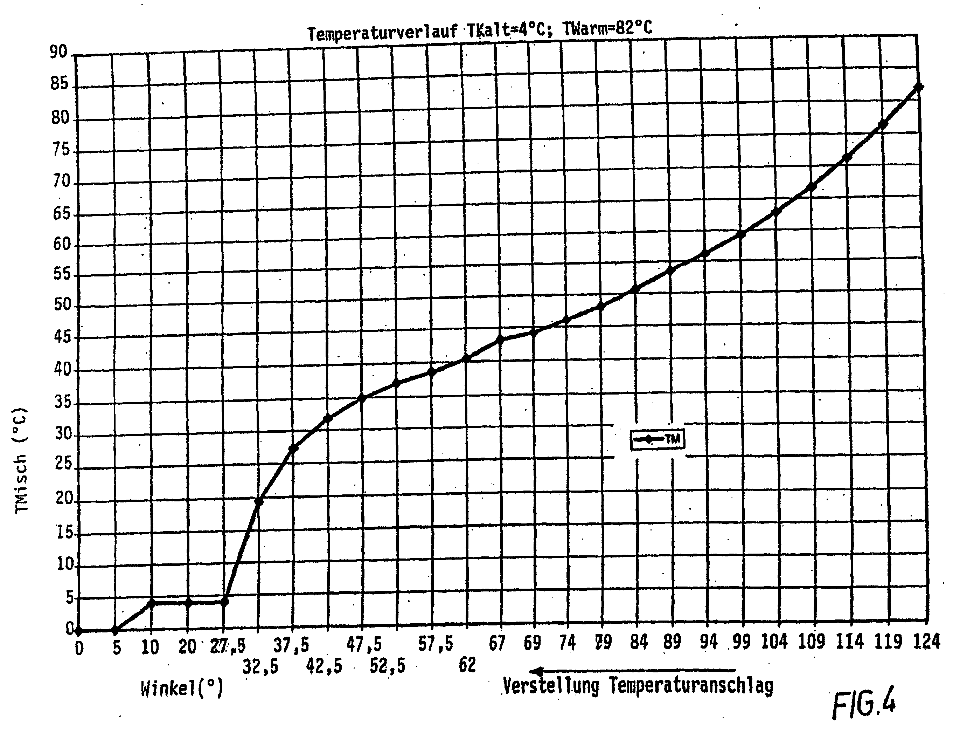

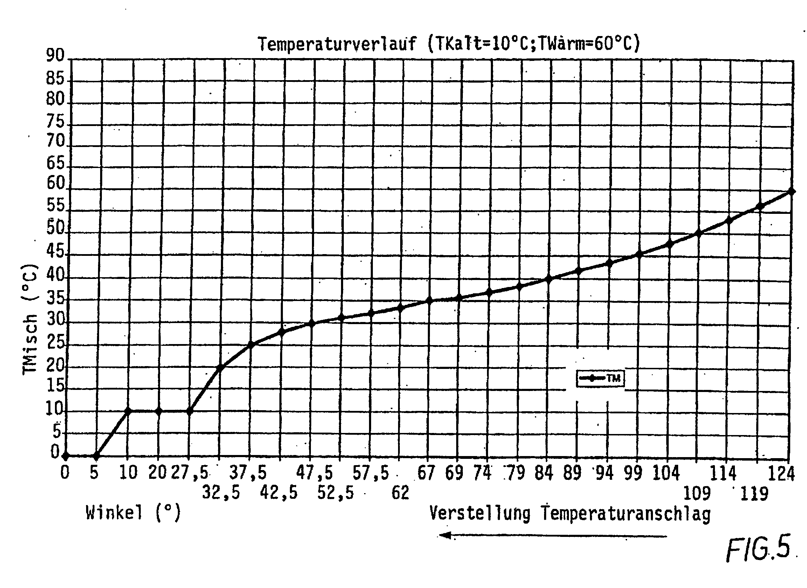

Im Folgenden soll die Erfindung noch anhand der beiliegenden Zeichnungen näher erläutert werden. Dabei zeigt die Fig. 1 eine Explosionsansicht einer Kartusche mit erfindungsgemäßem Mitnehmer. Die Fig. 2 zeigt eine Kartusche in zusammengesetztem Zustand mit einem erfindungsgemäßen Mitnehmer, bei dem die Hülse abgezogen ist, wobei die Kartusche im Bereich der Spindel und des festen Mitnehmers etwas anders als in Fig. 1 ausgeführt ist. Die Fig. 3 zeigt die Kartusche aus Fig. 2 mit aufgesetzter Hülse. Die Fig. 4 und 5 zeigen den Temperaturverlauf des aus einem Mischventil austretenden Wassers bei unterschiedlichen Annahmen für die Temperatur des zufließenden Kalt- und Warmwassers.

In der Fig. 1 ist der Kartuschengehäuseboden mit 16 bezeichnet, der unter Einfügung von Dichtungen 17 bei der Montage am Boden des Armaturengehäuses zu liegen kommt. Auf oder in dem Kartuschengehäuseboden 16 liegt eine feste Ventilscheibe 1, auf der dichtend eine bewegliche Ventilscheibe 2 angeordnet ist. In die bewegliche Ventilscheibe 2 greift ein Mitnehmer 4 ein, der fest auf einer Spindel 3 angeordnet ist, die den Mitnehmer 4 auch durchsetzt. Der Mitnehmer 4 besteht aus einem festen Teil 8, der in einem Bereich seines äußeren Umfangs eine Verzahnung 9 aufweist. Dieser Bereich mit der Verzahnung 9 durchragt im montierten Zustand des Ventils die Öffnung 12 des Kartuschengehäuses 7. In der Öffnung 12 erstrecken sich radial nach innen zwei Anschläge 6, 26. Mit dem Bezugszeichen 10 ist eine Hülse bezeichnet, die ebenfalls Teil des Mitnehmers 4 ist und an ihrer inneren Fläche eine Verzahnung 11 aufweist, die im montierten Zustand in die Verzahnung 9 des festen Teils 8 des Mitnehmers 4 eingreift. An ihrem äußeren Umfang weist die Hülse 10 über einen Teil ihrer Höhe eine Anschlagnase 5 auf, die mit dem Anschlag 6 des Kartuschengehäuses 7 zusammenwirkt. Dieser Anschlag 6 begrenzt die Drehung der Spindel 3 im montierten Zustand des sanitären Misch- und Absperrventils. Die Teilung der Verzahnung 9,11 ist zB. 10°, sodaß die Anschlagnase 5 durch Abziehen der Hülse 10 vom festen Teil 8, Verdrehen und Wiederaufstecken, um einen Winkel von 10° oder eines Vielfachen von 10° versetzt werden kann, um den Heißwasseranschlag zu verstellen. Die Fertigung einer Teilung der Verzahnung 9,11, die kleiner als 10° ist, ist sehr schwierig, sodaß durch die Verzahnung 'nur ein grobes Verstellen der Anschlagnase 5 möglich ist. Die Hülse 10 weist an ihrem dem Kartuschengehäuse 7 abgewandten Ende ebenfalls über einen Teil ihrer Höhe eine zweite Anschlagnase 15 auf, die mit dem Anschlag 6 des Kartuschengehäuses 7 zusammenwirkt, wenn man die Hülse 10 umdreht, d.h. in anderer Richtung auf den festen Teil 8 des Mitnehmers 4 aufsteckt. Die wirksamen Anschlagflächen 13 und 14 der Anschlagnasen 5 und 15 sind dabei im vorliegenden Beispiel um 5° versetzt, sodaß durch die Wahl der Positionen der Verzahnungen 9 und 11 gegeneinander und die Wahl der Richtung in der die Hülse 10 auf den festen Teil 8 aufgesteckt wird, eine Einstellung des Heißwasseranschlages in 5°-Schritten möglich ist.

Die Fig. 2 zeigt die Kartusche im montierten Zustand. Aus dem Kartuschengehäuse 7 ragt durch die zentrale Öffnung 12 der feste Teil 8 des Mitnehmers 4, der an seiner äußeren Oberfläche eine Verzahnung 9 aufweist. Die Hülse 10 ist im abgenommenen Zustand gezeigt. Sie weist an ihrer inneren Oberfläche eine Verzahnung 11 auf, die für den Eingriff mit der Verzahnung 9 des festen Teiles 8 des Mitnehmers 4 vorgesehen ist. Die Hülse 10 weist insgesamt vier Anschlagnasen 5, 15 auf, zwei davon 15 diametral zueinander angeordnet in der oberen Hälfte und zwei 5 diametral zueinander angeordnet in der unteren Hälfte der Hülse 10. Die Hülse 10 kann nunmehr so durch Eingreifen der Verzahnung 11 in die Verzahnung 9 auf den festen Teil 8 des Mitnehmers 4 aufgesetzt werden, daß die Anschlagfläche 14 der seitlichen Anschlagfläche des Anschlages 6 im Kartuschengehäuse 7 gegenüberliegen. Die Hülse 10 und damit der gesamte Mitnehmer 4 und auch die bewegliche Ventilscheibe 2 können damit insoweit gedreht werden, wie es die Anschlagnase 5 zwischen den beiden diametral gegenüberliegend angeordneten, in die Öffnung 12 hineinragenden Anschläge 6, 26 zuläßt. Die Hülse 10 kann aber auch umgedreht werden, so daß anstelle der Anschlagnase 5 die Anschlagnase 15 mit ihrer Anschlagfläche 13 in dem Bereich zwischen den Anschlägen 6, 26 hineinragt und die Rotation durch das Anliegen der Anschlagfläche 13 am Anschlag 6 begrenzt. Die Anschlagflächen 13 und 14 sind gegeneinander versetzt, so daß sich durch das Umdrehen der Hülse 10 eine Verschiebung des Rotationswinkels um den Winkel β ergibt. Haben die Verzahnungen 9 und 11 z.B. eine Teilung von 10° und ist die Versetzung β 5° groß, so kann je nach Eingriff der Verzahnungen 9 und 11 und der Richtung, in der die Hülse auf den festen Teil 8 des Mitnehmers 4 aufgesteckt wird, der Rotationsbereich in 5°-Schritten verschoben werden.

In Fig. 3 sieht man die Kartusche im vollständig montierten Zustand, d.h., die Hülse 10 ist auf den festen Teil 8 des Mitnehmers 4 aufgesteckt. Die Anschlagnase 5 liegt mit ihrer Anschlagfläche 14 am Anschlag 6 des Kartuschengehäuses 7 an. In der gezeigten Position fließt durch das Mischventil das wärmstmögliche Mischwasser. Ist die Temperatur dieses wärmstmöglichen Mischwassers zu hoch oder zu niedrig, so kann dies korrigiert werden, indem die Hülse 10 vom festen Teil 8 des Mitnehmers 4 abgezogen und versetzt wieder draufgesteckt wird. Gegebenenfalls kann durch Umdrehen der Hülse auch ein Zwischenschritt eingestellt werden.

In der Fig. 4 ist der Temperaturverlauf eines Mischventils gezeigt, wobei das zugeführte Kaltwasser eine Temperatur von 4°C und das zugeführte Heißwasser eine Temperatur von 82°C hat. Wie man sieht, läßt das Mischventil eine Rotation der beweglichen Ventilscheibe um 124° zu. Zwischen 0 und 5° ist das Ventil zur Gänze geschlossen, wird.die Scheibe weitergedreht, so kann erst Kaltwasser, dann Mischwasser und schließlich Warmwasser bis zu einer Temperatur von 82°C beim Winkel 124° entnommen werden. D.h., bei dem für diese Untersuchung verwendeten Mischventil kann die Ventilscheibe so weit gedreht werden, daß am obersten Bereich der Warmwasserentnahme tatsächlich die Kaltwasseröffnung geschlossen ist. Um nunmehr die Temperatur des zu entnehmenden Mischwassers nach oben hin zu begrenzen, kann, wenn das Mischventil mit dem erfindungsgemäßen Mitnehmer ausgestattet ist, die Hülse 10 gegenüber dem festen Teil 8 des Mitnehmers 4 so versetzt werden, daß die Anschlagnasen 5,15 am Mitnehmer mit den Anschlägen 6, 26 des Gehäuses 7 so zusammenwirken, daß der Rotationswinkel und damit die Maximaltemperatur begrenzt wird.

Die gewünschte Maximaltemperatur wird in Abhängigkeit vom Einsatzgebiet des Mischventils zwischen 40 und 60°C liegen. Wie man der Fig. 4 entnehmen kann, bewirkt eine Verdrehung der beweglichen Ventilscheibe in diesem Bereich um 10° eine Temperaturerhöhung um 5°C. Hat die Verzahnung des festen Teils 8 des Mitnehmers 4 und der Hülse 10 eine Teilung von 10° und ist die Versetzung zwischen den beiden Anschlagflächen 13, 14 5°, so kann man mit einem solchen Mischventil die Maximaltemperatur des Mischventils in 2,5°C-Schritten einstellen. Möchte man z.B. als Maximaltemperatur 50°C einstellen, so müßte die Rotation auf 84° mit Hilfe des Anschlages beschränkt werden. Entsprechend der gezeigten Kurve entspricht dies einer Temperatur von 51°C.

Die Fig. 5 schließlich zeigt den Temperaturverlauf des einem Mischventil entnommenen Mischwassers bei anderen Ausgangsbedingungen, nämlich mit einer Temperatur des zufließenden Kaltwassers von 10°C und einer Temperatur des zufließenden Heißwassers von 60°C. Man erkennt, daß das verwendete Mischventil wiederum vom geschlossenen Zustand über reines Kaltwasser und Mischwasser bis zum reinen Heißwasser bedient werden kann, wenn der Temperaturanschlag am äußersten Ende ist. Würde man das Mischventil wiederum mit einer Rotation von 84° begrenzen, wie im vorhergehenden Beispiel, so wäre die maximale Warmwassertemperatur 40°C, was für bestimmte Einsatzbereiche, z.B. als Küchenarmatur, zu kalt wäre. Um die gewünschten 50°C als Maximaltemperatur einzustellen, müßte bei diesen Ausgangsbedingungen die Rotation auf 109° begrenzt werden.

Aus den beiden gezeigten Beispielen ergibt sich klar, daß das erfindungsgemäße Mischventil einen großen Komfort bietet, indem mit.dem Ventil einfach die Maximaltemperatur des zu entnehmenden Mischwassers begrenzt werden kann und auch individuell auf die gegebenen.Bedingungen eingestellt werden kann.

## Patentansprüche

1. Sanitäres Mischventil mit zwei in einem Kartuschengehäuse (7) angeordneten Ventilscheiben (1, 2), von denen eine drehfest gehalten ist und die andere über einen an einer Spindel (3) vorgesehenen Mitnehmer (4) bewegt werden kann, wobei der Mitnehmer (4) aus einem mit der Spindel (3) fest verbundenen Teil (8), der in zumindest einem Bereich seines äußeren Umfanges eine Verzahnung (9) aufweist und einer Hülse (10) besteht, 'die an ihrer inneren Umfangsfläche eine Verzahnung (11) aufweist, die im montierten Zustand in die Verzahnung (9) des festen Teils (8) des Mitnehmers (4) eingreift, wobei die Hülse (10) mindestens eine Anschlagnase (5, 15) aufweist, die in Zusammenwirkung mit mindestens einem Anschlag (6, 26) am Kartuschengehäuse (7) die Rotationsbewegung des Mitnehmers (4) begrenzt, **dadurch gekennzeichnet, daß** sich mindestens eine erste Anschlagnase (5) über einen Teil der Höhe der Hülse (10) erstreckt und daß sich über einen anderen Teil der Höhe mindestens eine zweite Anschlagnase (15) erstreckt, deren Anschlagfläche (13) eine Versetzung (β) gegenüber der Anschlagfläche (14) der ersten Anschlagnase (5) aufweist, wobei die Hülse (10) in zwei verschiedene Richtungen auf den festen Teil (8) des Mitnehmers (4) aufsetzbar ist und die erste und die zweite Anschlagnase (5, 15). alternativ mit dem Anschlag (6) zusammenwirken, der im Kartuschengehäuse (7) vorgesehen ist.

2. Ventil nach Anspruch 1, **dadurch gekennzeichnet, daß** der feste Teil (8) des Mitnehmers (4) im montierten Zustand mit seinem die Verzahnung (9) aufweisendem Bereich durch eine zentrale Öffnung (12) im Kartuschendeckel aus dem Kartuschengehäuses (7) ragt und die Hülse (10) von außen auf den festen Teil (8) aufgesetzt ist und mit der mindestens einen Anschlagnase (5, 15) in die Öffnung (12) eingreift, in die sich radial der mit dem Kartuschengehäuse (7) feste Anschlag (6, 26) erstreckt.

3. Ventil nach Anspruch 1 oder 2, **dadurch gekennzeichnet, daß** die Teilung der Verzahnung (9, 11) am äußeren Umfang des festen Teils (8) des Mitnehmers (4) und an der inneren Umfangfläche der Hülse (10) 10° ist.

4. Ventil nach einem der Ansprüche 1 bis 3, **dadurch gekennzeichnet, daß** die Versetzung (β) die Hälfte der Teilung der Verzahnung (9, 11) am äußeren Umfang des festen Teils (8) des Mitnehmers (4) und an der inneren Umfangfläche der Hülse (10) ist.

## Claims

1. Sanitary mixing valve having two valve discs (1, 2) arranged in a cartridge housing (7), one of which is held in a rotationally secure manner and the other of which can be moved by way of a driver (4) provided on a spindle (3), with the driver (4) consisting of a portion (8) that is fixedly connected to the spindle (3) and has in at least one region of its outer circumference a tooth construction (9), and of a sleeve (10), which on its inner circumferential surface has a tooth construction (11) which in the assembled state engages into the tooth construction (9) of the fixed portion (8) of the driver (4), with the sleeve (10) having at least one stop lug (5, 15) which in cooperation with at least one stop (6, 26) on the cartridge housing (7) limits the rotational movement of the driver (4), **characterised in that** at least one first stop lug (5) extends over a portion of the height of the sleeve (10), and **in that** at least one second stop lug (15), whose stop face (13) is offset (β) in relation to the stop face (14) of the first stop lug (5), extends over another portion of the height, it being possible to set the sleeve (10) onto the fixed portion (8) of the driver (4) in two different directions and with the first and the second stop lug (5, 15) cooperating alternatively with the stop (6) provided in the cartridge housing (7).

2. Valve according to claim 1, **characterised in that** in the assembled state the fixed portion (8) of the driver (4) projects with its region that has the tooth construction (9) through a central opening (12) in the cartridge cover out of the cartridge housing (7), and the sleeve (10) is set onto the fixed portion (8) from the outside and engages, with the at least one stop lug (5, 15), into the opening (12) into which the stop (6, 26) that is integral with the cartridge housing (7) radially extends.

3. Valve according to claim 1 or 2, **characterised in that** the pitch of the tooth construction (9, 11) on the outer circumference of the fixed portion (8) of the driver (4) and on the inner circumferential surface of the sleeve (10) is 10°.

4. Valve according to one of claims 1 to 3, **characterised in that** the offset (β) is half of the pitch of the tooth construction (9, 11) on the outer circumference of the fixed portion (8) of the driver (4) and on the inner circumferential surface of the sleeve (10).

## Revendications

1. Robinet mitigeur sanitaire ayant deux disques (1, 2) de robinet disposés dans un boîtier (7) de cartouche, dont l'un est maintenu fixe en rotation et dont l'autre peut être déplacé par l'intermédiaire d'un entraîneur (4) prévu sur une broche (3), l'entraîneur (4) étant constitué d'une partie (8) assemblée rigidement à la broche (3) et ayant une denture (9) dans au moins une partie de son pourtour extérieur et d'une douille (10) qui a sur sa surface périphérique intérieure une denture (11) qui, à l'état monté, engrène dans la denture (9) de la partie (8) fixe de l'entraîneur (4), la douille (10) ayant au moins un bec (5, 15) de butée qui, en coopération avec au moins une butée (6, 26) sur le boîtier (7) de cartouche, limite le mouvement de rotation de l'entraîneur (4), **caractérisé en ce qu'**au moins un premier bec (5) de butée s'étend sur une partie de la hauteur de la douille (10) et **en ce qu'**au moins un deuxième bec (15) de butée, dont la surface (13) de butée présente un décalage (β) par rapport à la surface (14) de butée du premier bec (5) de butée, s'étend sur une autre partie de la hauteur, la douille (10) pouvant être mise dans deux directions différentes sur la partie (8) fixe de l'entraîneur et le premier et le deuxième becs (5, 15) de butée coopèrent en alternance avec la butée (6) qui est prévue dans le boîtier (7) de cartouche.

2. Robinet suivant la revendication 1, **caractérisé en ce que** la partie (8) fixe de l'entraîneur (4) dépasse, à l'état monté, par sa partie ayant la denture (9), par une ouverture (12) centrale ménagée dans le couvercle de la cartouche, du boîtier (7) de cartouche et la douille (10) est mise, de l'extérieur, sur la partie (8) fixe et pénètre par le au moins un bec (5, 15) de butée dans l'ouverture (12), dans laquelle s'étend radialement la butée (6, 26) solidaire du boîtier (7) de cartouche.

3. Robinet suivant la revendication 1 ou 2, **caractérisé en ce que** le pas de la denture (9, 11) sur le pourtour extérieur de la partie (8) fixe de l'entraîneur (4) et sur la surface périphérique intérieure de la douille (10) est de 10°.

4. Robinet suivant l'une des revendications 1 à 3, **caractérisé en ce que** le décalage (β) est égal à la moitié du pas de la denture (9, 11) sur le pourtour extérieur de la partie (8) fixe de l'entraîneur (4) et sur la surface périphérique intérieure de la douille (10).
